# EUROPÄISCHE PATENTSCHRIFT

(11) **EP 3 768 970 B1**
(45) Veröffentlichungstag und Bekanntmachung des Hinweises auf die Patenterteilung: **16.03.2022**
(21) Anmeldenummer: 19729497.8
(22) Anmeldetag: 04.06.2019
(51) Int. Cl.: F03D 7/02

(54) **VERFAHREN ZUM BETREIBEN EINER WINDENERGIEANLAGE, WINDENERGIEANLAGE UND WINDPARK**
METHOD FOR OPERATING A WIND TURBINE, WIND TURBINE, AND WIND PARK
PROCÉDÉ POUR FAIRE FONCTIONNER UNE ÉOLIENNE, ÉOLIENNE ET PARC ÉOLIEN

(30) Priorität: 08.06.2018 DE 102018113706
(43) Veröffentlichungstag der Anmeldung: 27.01.2021
(73) Patentinhaber: Wobben Properties GmbH, 26607 Aurich (DE)
(72) Erfinder: VON ASWEGE, Enno, 26629 Großefehn (DE)
(74) Vertreter: Eisenführ Speiser
(86) Internationale Anmeldenummer: PCT/EP2019/064540
(87) Internationale Veröffentlichungsnummer: WO 2019/234053

(56) Entgegenhaltungen:
- WO-A2-2012/110173
- US-A- 4 297 076
- VAN TAN LUONG ET AL: "Advanced Pitch Angle Control Based on Fuzzy Logic for Variable-Speed Wind Turbine Systems", IEEE TRANSACTIONS ON ENERGY CONVERSION, IEEE SERVICE CENTER, PISCATAWAY, NJ, US, Bd. 30, Nr. 2, 1. Juni 2015 (2015-06-01), Seiten 578-587, XP011581299, ISSN: 0885-8969, DOI: 10.1109/TEC.2014.2379293 [gefunden am 2015-05-15]

## Beschreibung

Die vorliegende Erfindung betrifft ein Verfahren zum Betreiben einer Windenergieanlage sowie eine das Verfahren einsetzende Windenergieanlage und einen zugehörigen Windpark.

Im Bereich von Windenergieanlagen ist es bekannt, dass die Steuerung der Windenergieanlage eine sogenannte Pitchregelung implementiert, das heißt eine Regelung, die einen Blattwinkel um eine Längsachse der Rotorblätter einstellt, um auf einen gewünschten Betriebspunkt zu regeln. Der Pitchwinkel der Rotorblätter hat einen signifikanten Effekt auf die aerodynamische Leistung des Rotors, wobei bei konstantem Blattwinkel, bzw. Pitchwinkel, die erzeugte aerodynamische Leistung mit steigender Windgeschwindigkeit ansteigt und gefährliche Lasten, insbesondere auf den Turm, erzeugen kann.

Besonders dann, wenn beispielsweise starke Böen auftreten, ändert sich die Windgeschwindigkeit sehr stark in sehr kurzer Zeit, während die Rotorblätter für einen niedrigeren Wind bei kleinen Blattwinkeln positioniert sind. Der kleine Blattwinkel führt dann mit dem durch die Windböe erzeugten starken Wind zu einem hohen Rotorschub, der extreme Turmbelastungen und hohe Turmlastschwingungsamplituden zur Folge haben kann.

Extremlasten werden erfindungsgemäß insbesondere in dem Bereich des Grenzzustandes erreicht, mit welchem ein Zustand einer Struktur und der auf sie einwirkenden Belastungen bezeichnet wird, bei deren Überschreitung sie nicht mehr den Auslegungsanforderungen entspricht. Die Auslegungsanforderung für den Grenzzustand hat somit den Zweck, dass eine Wahrscheinlichkeit, dass der Grenzzustand erreicht wird, unter einem vorgeschriebenen Wert gehalten wird, vgl. ISO 2394.

Um die maximalen Auslegungslasten zu verringern, ist es eine Aufgabe der vorliegenden Erfindung, ein Verfahren zum Betreiben einer Windenergieanlage sowie eine zugehörige Windenergieanlage dahingehend zu verbessern, die auf den Turm wirkende Extremlasten zu verringern. Allgemeiner ist es ferner eine Aufgabe der vorliegenden Erfindung, eine Reduktion der Betriebslasten beim Betreiben einer Windenergieanlage zu erreichen.

Das Deutsche Patent- und Markenamt hat in der Prioritätsanmeldung zu vorliegender PCT-Anmeldung folgenden Stand der Technik recherchiert: US 2013/0115082 A1 und US 2017/0152835 A1. Das Dokument WO2012/110173 A2 ist ein weiteres Beispiel für den Stand der Technik.

Gemäß einem ersten Aspekt wird die Aufgabe erfindungsgemäß durch ein Verfahren zum Betreiben einer Windenergieanlage gelöst. Die Windenergieanlage weist einen aerodynamischen Rotor mit wenigstens einem Rotorblatt, das an einer Rotornabe des Rotors montiert ist, auf, wobei ein Blattwinkel des wenigstens einen Rotorblattes um seine Längsachse bezüglich der Rotornabe verstellbar ist. Das Verfahren umfasst die folgenden Schritte: i) Bereitstellen aktueller Windeigenschaften, ii) Bereitstellen eines Ist-Blattwinkel des Rotorblattes oder eines Mittelwertes aller Ist-Blattwinkel der Rotorblätter, iii) Bestimmung eines Stationärblattwinkels des wenigstens einen Rotorblattes, der unter Berücksichtigung bekannter Rotoreigenschaften, dem elektrischen System und den Windeigenschaften zu einem gewünschten stationären Betriebszustand der Windenergieanlage führt, iv) Vergleich des Stationärblattwinkels mit dem Ist-Blattwinkel oder dem Mittelwert aller Ist-Blattwinkel, v) Anpassen eines Betriebs der Windenergieanlage, wenn der Stationärblattwinkel signifikant von dem Ist-Blattwinkel oder dem Mittelwert aller Ist-Blattwinkel abweicht.

Das erfindungsgemäße Verfahren ermöglicht demnach, für gewisse bestimmte Windeigenschaften, wie beispielsweise eine Windgeschwindigkeit und/oder eine Windrichtung, einen Blattwinkel, genannt Stationärblattwinkel, zu bestimmen, der zu dem gewünschten Anlagenzustand führt. Das Verfahren ermöglicht demnach, das Aufkommen von Böen bereits frühzeitig zu erkennen, und aktiv die Windenergieanlage zu steuern, beispielsweise die Rotorblätter aus dem Wind zu drehen. Im Gegensatz zu einer Drehzahl-Regelung, ermöglicht die erfindungsgemäße Steuerung einen erheblichen Zeitvorteil, der in einer reduzierten Maximalbelastung auf den Turm, insbesondere im Fall von Starkböen resultiert. Das erfindungsgemäße Verfahren kann demnach hierbei als Vorsteuerung in dem Reglerentwurf der Windenergieanlage implementiert sein.

Dadurch, dass die Vorsteuerung lediglich dann den Betrieb anpasst, wenn die festgestellte Abweichung signifikant ist, wird gewährleistet, dass die Zahl der Steuerungseingriffe reduziert ist. Somit wird die Frequenz der Änderungen der zu fahrenden Rotorblattwinkel reduziert, was sich positiv auf die Lebenszeit der Windenergieanlage und insbesondere der Pitchkomponenten auswirkt.

Die "Signifikanz" der Abweichung verhindert auch, dass Bestimmungsfehler, d.h. Schätzfehler, in den Windbedingungen zu Fehlreaktionen führen. Es wird insbesondere reagiert, wenn die Differenz aus "Ist" zu "Soll" größer ist, als allein aus Schätzunsicherheiten zu erwarten wäre. Die zu erwartenden Schätzunsicherheiten, beispielsweise in Form eines Erwartungswertes oder einer Standardabweichung oder Vielfachen davon, sind somit vorzugsweise Kriterien für die Signifikanz.

Darüber hinaus wird durch das erfindungsgemäße Verfahren eine Reaktion unabhängig von der Form und Art der Böe ermöglich, da nicht die Böe als Solche sondern die Signifikanz der Änderung erkannt wird. Auch in Fällen bestimmter Böen, die beispielsweise zunächst eine Abschwächung des Windes vor dem deutlichen Anstieg des Windes mit sich bringen, wird somit verhindert, dass die Steuerung zu Beginn des Auftretens der Böe eine kontraproduktive Wirkung zeigt, nämlich den Rotorblattwinkel zunächst bei absinkendem Wind verringert. Dies würde im Anschluss bei dann stark ansteigendem Wind für eine größere Diskrepanz zwischen dem stationären Blattwinkel und dem Ist-Blattwinkel führen, was aber gerade durch die Prüfung auf Signifikanz unterbleibt bzw. abgeschwächt wird.

Der gewünschte Betriebszustand der Windenergieanlage ist vorzugsweise ein Betriebszustand, in dem die Windenergieanlage Nennleistung erzeugt. Demnach würde die Windenergieanlage in diesem gewünschten Betriebszustand immer mit Nenndrehzahl betrieben werden, sodass die Drehzahlregelung der Windenergieanlage von dem erfindungsgemäßen Verfahren in einer Ausführung unabhängig ist.

Vorzugsweise umfasst der gewünschte stationäre Betriebszustand eine von dem Rotor aufgenommene gewünschte aerodynamische Leistung. Natürlich ist der Betriebszustand nicht auf die aerodynamische Leistung beschränkt und auch andere Betriebsgrößen, insbesondere betreffend die Leistung, können ebenfalls verwendet werden. Beispielsweise kann die erzeugte bzw. in das Netz eingespeiste elektrische Leistung als stationärer Betriebszustand verwendet werden und durch geeignete Mittel umgerechnet werden.

In weiteren Ausführungen kann das erfindungsgemäße Verfahren aber natürlich auch mit einer Drehzahlregelung, beispielsweise als Vorsteuerung, verknüpft sein, sodass die Steuerung auch bei Böen, d.h. bei Änderungen der Windeigenschaften, eingreift, die unterhalb der Nennwindgeschwindigkeit liegen und damit keine Nennleistung der Windenergieanlage ermöglichen. In diesem Sinn ist der gewünschte Betriebszustand folglich nicht auf Nennleistung eingeschränkt.

Die aktuellen Windeigenschaften werden mittels bekannter Verfahren bereitgestellt. Geeignete Verfahren sind beispielsweise Anemometermessungen, aber auch ein Windschätzer, LIDAR oder vergleichbare Verfahren. Für das Verfahren werden die bestimmten bzw. bereitgestellten Windeigenschaften vorzugsweise als stationär angenommen, das heißt es ist keine Vorhersage oder ähnliches der Windeigenschaften erforderlich.

In dem gewünschten Betriebszustand nimmt der Rotor der Windenergieanlage eine gewollte aerodynamische Leistung auf, die eben von den aktuellen Windeigenschaften abhängt. Hier sollte beachtet werden, dass die Erkennung der Veränderung der Windgeschwindigkeit, beispielsweise die Form oder der Verlauf der Böe, nicht durch das Verfahren eingeschränkt ist. Das heißt, das Verfahren erfordert kein Beobachten oder Verfolgen der Windeigenschaften, beispielsweise der Windgeschwindigkeit, sondern betrachtetet ausschließlich die aktuell bereitgestellten Windeigenschaften. Dennoch wird mit dem Verfahren nur bei starken Änderungen der Windgeschwindigkeiten in den Betrieb der Windenergieanlage eingegriffen, da die Differenz zwischen Ist-Blattwinkel und stationärem Blattwinkel bei geringeren Änderungen durch die Regelung der Windenergieanlage mit einiger Verzögerung ausgeglichen wird. Nur bei starken bzw. schnellen Änderungen der Windgeschwindigkeit wird die träge Reaktion der Regelung für entsprechend signifikante Abweichungen des Stationärblattwinkels von dem Ist-Blattwinkel sorgen.

Demnach wird gemäß dem Verfahren das Muster oder die Art der Böe nicht erkannt, sondern lediglich das Auftreten starker Veränderungen der Windgeschwindigkeit, d.h. insbesondere Veränderungen von über 2 m/s und besonders über 5 m/s, in kurzer Zeit, d.h. insbesondere weniger als 4 s und besonders weniger als 2 s, sowohl ansteigend als auch abfallend, werden über das erfindungsgemäße Verfahren derart verarbeitet, dass eine Reduktion der sich daraus ergebenden Extremlasten auf den Turm folgt. Der zentrale Vorteil des erfindungsgemäßen Verfahrens ist die frühzeitige Erkennung und beispielsweise das daraus folgende frühzeitige Zurückfahren der Blätter, die einen deutlichen Zeitvorteil gegenüber den vorbekannten Lösungen zur Regelung von Windenergieanlagen bietet.

In einer bevorzugten Ausführungsform des Verfahrens wird zusätzlich eine bereitgestellte Drehzahl zur Bestimmung des Stationärblattwinkels herangezogen. Die Drehzahl beziehungsweise davon abgeleitet die Schnelllaufzahl ermöglicht, den Stationärblattwinkel präzise zu bestimmen.

In einer bevorzugten Ausführungsform des Verfahrens weicht der Stationärblattwinkel signifikant von dem Ist-Blattwinkel oder dem Mittelwert aller Ist-Blattwinkel ab, wenn die Abweichung größer eines Schwellwertes, oder größer eines Systems aus mehrstufigen Schwellwerten ist, wobei der Schwellwert oder die Schwellwerte vorzugsweise in einem Bereich von 2° bis 3° liegen. Vorzugsweise umfasst das Anpassen des Betriebs der Windenergieanlage in Abhängigkeit des Stationärblattwinkels demnach in einer Ausführungsform: vi) Bestimmen einer Abweichung des Stationärblattwinkels von einem Ist-Blattwinkel des Rotorblattes bzw. von einem Mittelwert der Ist-Blattwinkel der mehreren Rotorblätter, vii) Vergleichen der Abweichung mit einem ersten vorgegebenen Schwellwert, vorzugsweise zwischen 2° und 3°, und viii) Anpassen eines Betriebs der Windenergieanlage, wenn die Abweichung den ersten vorgegebenen Schwellwert überschreitet.

In einem einfachsten Beispiel dienen einfache Schwellwerte zur Beurteilung, ob die geforderte Signifikanz vorliegt oder nicht. Auch Abwandlungen und Kombinationen aus Schwellwerten und komplexen Funktionen, beispielsweise gestaffelte Schwellwerte, sind denkbar. Ebenso kann mehr als eine Eingangsgröße, d.h. mehr als die Abweichung des Stationärblattwinkels von dem Ist-Blattwinkel oder dem Mittelwert aller Ist-Blattwinkel, beispielsweise zusätzlich gemessene oder geschätzte Geschwindigkeiten, herangezogen werden.

Gemäß dieser Ausführungsform wird demnach zunächst eine Abweichung des Stationärblattwinkels von dem Ist-Blattwinkel des bzw. der Rotorblätter bestimmt. Der Mittelwert der Ist-Blattwinkel bei mehreren Rotorblättern ist besonders dann sinnvoll, wenn die Blätter eine Einzelblattverstellung ermöglichen. Diese bestimmte Abweichung wird dann mit einem ersten vorgegebenen Schwellwert verglichen und der Betrieb der Windenergieanlage nur dann angepasst, wenn die Abweichung den ersten vorgegebenen Schwellwert überschreitet. Ganz grundsätzlich kann die Anpassung des Betriebs natürlich auch unmittelbar ohne Überschreiten des Schwellwertes vorgenommen werden, beispielsweise kann der Blattwinkel unmittelbar auf den Stationärblattwinkel gesteuert werden. Obwohl eine derartige Windenergieanlage automatisch theoretisch bzw. einfach betrachtet perfekt geregelt wäre, das heißt Drehzahl und Leistung optimal geregelt wären, würden Fehler der bereitgestellten Windeigenschaften zu erhöhten Lasten, bzw. einer Überdrehzahl/Unterdrehzahl führen, weshalb nicht direkt auf den Stationärblattwinkel gesteuert wird. Der Schwellwert der Abweichung zwischen Stationärblattwinkel und Ist-Blattwinkel lässt demnach die Fortführung der bekannten Drehzahl und/oder Leistungsregelung zu und führt lediglich zu Anpassungen, wenn diese um einen deutlichen Faktor, beispielsweise zwischen 2° und 3°, von dem Stationärblattwinkel, der über die bereitgestellten Windeigenschaften ermittelt wurde, abweicht.

Im Rahmen dieser Offenbarung ist insbesondere der Begriff Schwellwert im weiten Sinn zu verstehen und soll nicht auf einen fest vorgegebenen Wert beschränkt sein. Entsprechend sind genauso Rampen oder Systeme mehrstufiger Schwellwerte ebenso unter dem Begriff Schwellwert zu verstehen. Insbesondere können als Rampen vorgesehene Schwellwerte von einem weiteren Parameter, einschließlich einer Turmkopfgeschwindigkeit, einer Windgeschwindigkeit, etc. abhängen. Auch Abwandlungen und Kombinationen aus Schwellwerten und komplexen Funktionen, beispielsweise gestaffelte Schwellwerte, sind denkbar. Ebenso kann mehr als eine Eingangsgröße, beispielsweise mehrere gemessene oder geschätzte Geschwindigkeiten, herangezogen werden.

Als Turmkopf wird vorliegend vorzugsweise die oberen 50 % der Höhe des Turmes der Windenergieanlage verstanden. Besonders bevorzugt bezieht sich der Turmkopf auf die oberen 20 % und insbesondere auf die oberen 10 % des Turmes. Insbesondere werden im Rahmen dieser Offenbarung in dem Kontext Last/Laständerungsgeschwindigkeit, Gondel/Turmkopfgeschwindigkeit hauptsächlich Bewegungen des Turmkopfes in Längsrichtung senkrecht zu einer Höhenrichtung des Turmes betrachtet. Ganz besonders sind die Längsbewegungen, die parallel zu der Windrichtung verlaufen, von Relevanz. Für die Längsbewegungen der Gondel, d.h. die Bewegungen, die keine Drehbewegungen der Gondel betreffen, kann die Turmkopfgeschwindigkeit mit der Geschwindigkeit der Gondel gleichgesetzt werden. Anders ausgedrückt kann die Turmkopfgeschwindigkeit als Längsbewegung bzw. translatorische Bewegung der Gondel bezeichnet und bestimmt werden.

In einer bevorzugten Ausführungsform erfolgt das Anpassen des Betriebs der Windenergieanlage proportional zur Abweichung zwischen dem Ist-Blattwinkel oder dem Mittelwert aller Ist-Blattwinkel und dem Stationärblattwinkel. Bis zum Erreichen einer bestimmten Abweichung würde die Anpassung des Betriebs der Anlage also nur reduziert erfolgen.

In einer bevorzugten Ausführungsform umfasst das Verfahren weiter: ix) Bestimmen einer Längsgeschwindigkeit eines Turmkopfes der Windenergieanlage in Richtung des Windes und/oder einer Turmlast-Änderungsgeschwindigkeit, x) Vergleichen der Längsgeschwindigkeit des Turmkopfes und/oder der Turmlast-Änderungsgeschwindigkeit mit einem zweiten vorgegebenen Schwellwert oder einem System aus mehrstufigen Schwellwerten. Das Anpassen des Betriebs der Windenergieanlage erfolgt nur dann, wenn die Längsgeschwindigkeit des Turmkopfes und/oder die Turmlast-Änderungsgeschwindigkeit s den zweiten vorgegebenen Schwellwert überschreitet.

Die Anpassung des Pitchwinkels, insbesondere die Erhöhung des Pitchwinkels, führt unmittelbar zu einer Reduzierung des Rotorschubes. Demnach kann, je nachdem in welcher Position der Schwingungsbewegung sich der Turmkopf befindet, die Erhöhung des Pitchwinkels, bzw. die Anpassung des Betriebs der Windenergieanlage vorteilhaft oder sogar kontraproduktiv sein. Gemäß dieser Ausführungsform wird die Geschwindigkeit des Turmkopfes mit als Bedingung herangezogen, um die Anpassung des Betriebs der Windenergieanlage vorzunehmen. Damit wird verhindert, dass für die Turmlasten, bzw. Turmschwingung kontraproduktive Anpassungen vorgenommen werden.

Die Geschwindigkeit des Turmkopfes und/oder der Gondel der Windenergieanlage wird vorzugsweise geschätzt und/oder berechnet und/oder gemessen. Hierzu können beispielsweise Dehnungsmessstreifen im Turm oder auch Beschleunigungsmesser, die im Turmkopf angeordnet sind, in bekannter Weise herangezogen werden. Allerdings sind natürlich auch andere Verfahren zur Bestimmung der Turmkopfgeschwindigkeit vorstellbar.

Der zweite vorgegebene Schwellwert entspricht vorzugsweise einer Geschwindigkeitskomponente des Turmkopfes nach hinten, das heißt von dem Rotor weg, mit einem bestimmten Betrag. Demnach erfolgt vorzugsweise ein Zurückfahren der Rotorblätter, das heißt ein Erhöhen des Pitchwinkels, nur dann, wenn der Turmkopf mit einer gewissen Geschwindigkeit nach hinten schwingt, während die Anpassung des Betriebs der Windenergieanlage, das heißt insbesondere das Zurückfahren der Blätter, nicht erfolgt, wenn der Turmkopf nach vorne schwingt.

In einer bevorzugten Ausführungsform des erfindungsgemäßen Verfahrens liegen der zweite vorgegebene Schwellwert oder das System aus mehrstufigen Schwellwerten in einer Größenordnung von 0,1 m/s bis 0,5 m/s für die Längsgeschwindigkeit des Turmkopfes. Der Bereich kann natürlich je nach Anwendungsgebiet und insbesondere der Größe der Windenergieanlage entsprechend passend gewählt werden.

In einer bevorzugten Ausführungsform des erfindungsgemäßen Verfahrens werden der zweite vorgegebene Schwellwert oder das System aus mehrstufigen Schwellwerten in Abhängigkeit der Signifikanz der Abweichung des Stationärblattwinkels von dem Ist-Blattwinkel oder dem Mittelwert aller Ist-Blattwinkel gebildet. Anders ausgedrückt, je stärker die Abweichung des Stationärblattwinkels von dem bzw. den momentan vorliegenden Blattwinkeln ist, je größer bzw. kleiner kann der zweite Schwellwert oder das System aus mehrstufigen Schwellwerten gewählt werden.

In einer bevorzugten Ausführungsform des erfindungsgemäßen Verfahrens ist die Signifikanz der Abweichung des Stationärblattwinkels von dem Ist-Blattwinkel oder dem Mittelwert aller Ist-Blattwinkel als komplexe Funktion der Turmlasten, insbesondere als Funktion der Längsgeschwindigkeit des Turmkopfes, implementiert.

In einer bevorzugten Ausführungsform des erfindungsgemäßen Verfahrens greift das Verfahren als Vorsteuerung in den Reglerentwurf zur Leistungsregelung der Windenergieanlage ein. Eine Vorsteuerung ermöglicht ein frühzeitiges Erkennen und Eingreifen veränderter Situation, z.B. wie vorliegend das Auftreten einer Böe.

In einer bevorzugten Ausführungsform des erfindungsgemäßen Verfahrens umfasst das Verfahren weiter ein Bereitstellen einer aktuellen rotoreffektiven Windgeschwindigkeit, wobei die Bestimmung des Stationärblattwinkels des wenigstens eines Rotorblattes basierend auf der aktuellen rotoreffektiven Windgeschwindigkeit erfolgt. Die rotoreffektive Windgeschwindigkeit ist die Windgeschwindigkeit, die effektiv auf den Rotor wirkt um beispielsweise eine bestimmte oder gemessene aerodynamische Leistung zu erzeugen. Es wird damit eine Windgeschwindigkeit, die effektiv auf den Rotor wirkt, geschätzt, ohne dass beispielsweise mittels Anemometer eine direkte Messung der Windgeschwindigkeit nötig ist. Damit können Messungenauigkeiten der Messung der Windgeschwindigkeit und/oder -richtung verringert werden.

In einer bevorzugten Ausführungsform des erfindungsgemäßen Verfahrens umfasst das Anpassen des Betriebes der Windenergieanlage ein Festlegen eines Mindestblattwinkels auf den bestimmten Stationärblattwinkel abzüglich eines Toleranzbands, wobei das Toleranzband vorzugsweise 1° bis 3° groß ist.

Wie bereits ausgeführt ist es möglich, den Mindestblattwinkel auf den bestimmten Stationärblattwinkel direkt festzulegen. Vorteilhaft ist aber das vorsehen des Toleranzbandes um den Stationärblattwinkel. Somit wird gemäß dieser Ausführungsform der Betrieb derart angepasst, dass der Mindestblattwinkel zwar niedriger als der Stationärblattwinkel, dennoch höher als der aktuell eingestellte Ist-Blattwinkel ist. Hierdurch kann auch verhindert werden, dass Schätzfehler im System dazu führen, dass ein zu hoher Stationärblattwinkel festgelegt bzw. angefahren wird, sozusagen durch das erfindungsgemäße Verfahren über das Ziel hinausgeschossen wird.

Alternativ oder zusätzlich kann in einer Ausführungsform der Betrieb der Windenergieanlage durch ein Absenken der Leistung, beispielsweise mittels des Generatormoments oder direkt als Sollwert der Leistung, erfolgen.

In einer bevorzugten Ausführungsform des erfindungsgemäßen Verfahrens umfasst das Anpassen des Betriebs der Windenergieanlage ein Absenken der Drehzahl. Das Absenken der Drehzahl ist insbesondere mit einem Absenken der Leistung verbunden.

In einer bevorzugten Ausführungsform des erfindungsgemäßen Verfahrens wird die aktuelle rotoreffektive Windgeschwindigkeit basierend auf einer Luftdichte, einem Leistungskoeffizienten-Kennfeld, dem Ist-Blattwinkel, einer Drehzahl der Windenergieanlage sowie einer aerodynamischen Leistung des Rotors geschätzt.

Die Luftdichte kann beispielsweise aus meteorologischen Daten erhalten werden oder direkt durch Messungen an der Windenergieanlage bestimmt werden. Bei dem Leistungskoeffizienten-Kennfeld handelt es sich vorzugsweise um das in den Windenergieanlagen vorhandene häufig als c_{P}-Kennfeld bezeichnete Kennfeld. Anhand des sich so darstellenden Betriebspunktes, lässt sich dann vorzugsweise eine Windgeschwindigkeit bestimmen, die diesen Umgebungsparametern entspricht, die als rotoreffektive Windgeschwindigkeit bezeichnet wird. Wie bereits eingehend erwähnt, sind selbstverständlich auch andere Formen des Windschätzers zur Bestimmung der rotoreffektiven Geschwindigkeit vorstellbar.

In einer bevorzugten Ausführungsform des erfindungsgemäßen Verfahrens wird eine aerodynamische Leistung des Rotors anhand einer turbinenseitigen Leistungsbilanz berechnet, wobei die turbinenseitige Leistungsbilanz vorzugsweise umfasst: a) elektrisch in ein Stromnetz eingespeiste Leistung b) Wärmeverluste, die gemessen, oder geeignet modelliert werden, und c) für die Rotor- und Generatorbeschleunigung aufgebrachte Leistung.

Die elektrische Leistung der Windenergieanlage (P_elektrisch) wird vorzugsweise per Wirkungsgradmodell in ein Luftspaltmoment überführt, das dann für die Leistungsbestimmung eingesetzt wird. Als zusätzliche Komponente zu diesem Luftspaltmoment wirkt ein Beschleunigungsleistungsanteil, der wiederum von der Rotordrehzahl sowie einer Trägheit des Rotors bestimmt wird. Durch diesen Korrekturfaktor wird ausgedrückt, welcher Teil der aerodynamischen Leistung durch die Beschleunigung des Rotors selbst aufgebraucht wird.

In einer bevorzugten Ausführungsform des erfindungsgemäßen Verfahrens erfolgt die Bestimmung des Stationärblattwinkels des wenigstens eines Rotorblattes als Funktion einer berechneten Schnelllaufzahl und eines berechneten Soll-Leistungskoeffizienten, wobei a) die Schnelllaufzahl als eine Funktion der bereitgestellten Windeigenschaften, einer Drehzahl der Windenergieanlage sowie eines Durchmessers des Rotors berechnet wird, und/oder b) der Soll-Leistungskoeffizient als eine Funktion der bereitgestellten Windeigenschaften, des Durchmessers des Rotors, eines Sollwertes der elektrischen Leistung und der Luftdichte berechnet wird.

Vorzugsweise ist in dieser Ausführungsform demnach der Stationärblattwinkel als eine Funktion von zwei Variablen, nämlich der Schnelllaufzahl und des Leistungskoeffizienten, ausgedrückt und kann beispielsweise in Form einer zweidimensionalen Tabelle hinterlegt sein. Demnach kann dann unter Bereitstellung der beiden Eingangsparameter ein gewünschter Stationärblattwinkel aus der hinterlegten Tabelle ausgelesen werden. Auch kann der Stationärblattwinkel natürlich ohne hinterlegte Werte direkt anhand einer vorbestimmten Funktion aus den Eingangsgrößen berechnet werden. Der Sollwert der elektrischen Leistung fließt vorzugsweise unter Anwendung eines Wirkungsgradmodells, das heißt unter Berücksichtigung von Wirkungsgradverlusten, in die Bestimmung des Soll-Leistungskoeffizienten ein. Der Sollwert der elektrischen Leistung kennzeichnet insbesondere den gewünschten Betriebszustand der Windenergieanlage, beispielsweise ist der Sollwert der elektrischen Leistung in etwa Nennleistung.

In einer bevorzugten Ausführungsform ist die Drehzahl ungefähr Nenndrehzahl und die Leistung in etwa Nennleistung, da sonst bei einer Veränderung der Windgeschwindigkeit keine signifikanten Auswirkungen auf zu erwartende Turmlasten auftreten. In dieser Ausführung reduziert sich das Problem der Bestimmung des Stationärblattwinkels um eine Dimension, nämlich um den Leistungskoeffizienten, und ist im Wesentlichen eindimensional nur noch von der geschätzten Windgeschwindigkeit abhängig. Dies ermöglicht eine besonders einfach auszulegende Implementierung, da die Bestimmung des Stationärblattwinkels als Liste eines Stationärblattwinkels über eine Schnelllaufzahl implementiert sein kann. Den besonderen Vorteil dieser Ausführungsform erhält man dadurch, dass sowohl für die Bestimmung des Soll-Leistungskoeffizienten als auch für die Bestimmung der Schnelllaufzahl die aktuelle rotoreffektive Windgeschwindigkeit Eingang findet.

In einer bevorzugten Ausführungsform des erfindungsgemäßen Verfahrens umfasst die Schnelllaufzahl die Soll-Schnelllaufzahl. Näherungsweise und in anderen Ausführungsformen kann anstatt der Soll-Schnelllaufzahl auch die Ist-Schnelllaufzahl verwendet werden.

Die besonders für Starkböen geeignete Vorsteuerung gemäß dem erfindungsgemäßen Verfahren verwendet demnach vorzugsweise ein c_{P}-Kennfeld zur Schätzung der Windgeschwindigkeit. Die Funktionsfähigkeit des Verfahrens wird durch tatsächliche Abweichungen zum Kennfeld und damit durch Schätzfehler beeinflusst. Werden allerdings anstelle der optimalen Blattpolaren beispielsweise schlechtere Blattpolaren von verschmutzten Rotorblättern angenommen, so hat sich herausgestellt, dass diese in der Regel zu weiter geringeren Lasten des Turmes führen. In Summe ist somit davon auszugehen, dass das erfindungsgemäße System gutmütig auf ungenaue Eingangsdaten reagiert. Das heißt, die Schätzfehler, wenn sie auftreten, führen zwar zu einer Unterschätzung der Windgeschwindigkeit und einem kleineren Sollblattwinkel, der allerdings aufgrund der Änderung der Polaren durch die Verschmutzung jedenfalls teilkompensiert wird. In Summe kann demnach die Turmlast sogar geringer sein.

In einer bevorzugten Ausführungsform des erfindungsgemäßen Verfahrens umfasst die Bestimmung des Stationärblattwinkels folgende Schritte: Bereitstellen einer Sensitivität, insbesondere in Form tabellierter Werte, des Rotors auf Blattwinkeländerungen, wobei die Sensitivität als Verhältnis der Änderung der aerodynamischen Leistung zu einer Änderung des Rotorblattwinkels in Abhängigkeit einer Schnelllaufzahl bereitgestellt wird, Bestimmen des Stationärblattwinkels ausgehend von dem Ist-Blattwinkel oder dem Mittelwert aller Ist-Blattwinkel unter Verwendung der Sensitivität, insbesondere durch schrittweise Integration der Sensitivität bis zum Erreichen der gewünschten aerodynamischen Leistung.

Gemäß einem zweiten Aspekt wird die erfindungsgemäße Aufgabe durch eine Windenergieanlage gelöst, die einen aerodynamischen Rotor mit wenigstens einem Rotorblatt, das an einer Rotornabe des Rotors montiert ist, aufweist, wobei ein Blattwinkel des wenigstens einen Rotorblattes um seine Längsachse bezüglich der Rotornabe verstellbar ist. Die Windenergie weist eine Steuerung auf, die dazu eingerichtet ist, die Windenergieanlage nach einem Verfahren gemäß wenigstens einer Ausführungsform des ersten Aspektes zu betreiben.

Gemäß einem dritten Aspekt wird die erfindungsgemäße Aufgabe ferner durch einen Windpark mit mehreren Windenergieanlagen gemäß dem zweiten Aspekt gelöst.

Die Windenergieanlage gemäß dem zweiten Aspekt sowie der Windpark gemäß dem dritten Aspekt ermöglichen, die gleichen Vorteile zu erreichen, wie sie mit Verweis auf das Verfahren gemäß dem ersten Aspekt beschrieben wurden. Ebenso sind sämtliche mit Bezug auf das erfindungsgemäße Verfahren beschriebenen Ausführungsformen samt dazugehörigem Vorteil auf die erfindungsgemäße Windenergieanlage sowie den erfindungsgemäßen Wind park übertragbar.

Weitere Vorteile und Ausgestaltungen werden im Folgenden mit Verweis auf die beigefügten Figuren beschrieben. Hierbei zeigen:
- Fig. 1: schematisch und exemplarisch eine Windenergieanlage;
- Fig. 2: schematisch und exemplarisch einen Windpark;
- Fig. 3: schematisch und exemplarisch den zeitlichen Verlauf des Auftretens einer Böe im Stand der Technik;
- Fig. 4: schematisch und exemplarisch den zeitlichen Verlauf aus Fig. 3 gemäß dem Verfahren der vorliegenden Erfindung;
- Fig. 5: schematisch und exemplarisch einen erfindungsgemäßen Windschätzer;
- Fig. 6: schematisch und exemplarisch das Verfahren der erfindungsgemäßen Starkböenvorsteuerung; und
- Fig. 7: schematisch und exemplarisch die erfindungsgemäße Starkböenvorsteuerung bei Profilpolaren verschmutzter Rotorblätter.

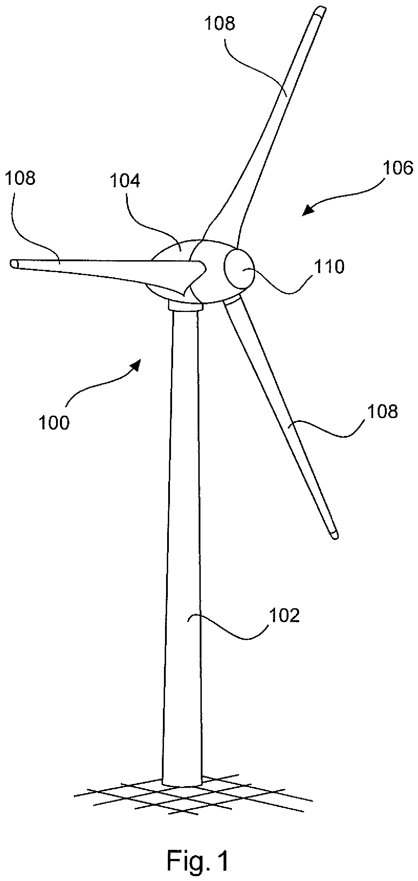

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

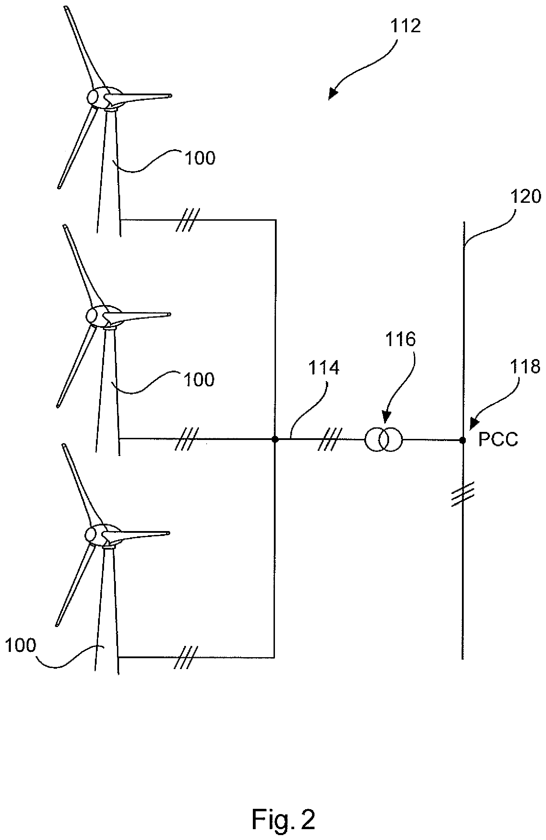

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

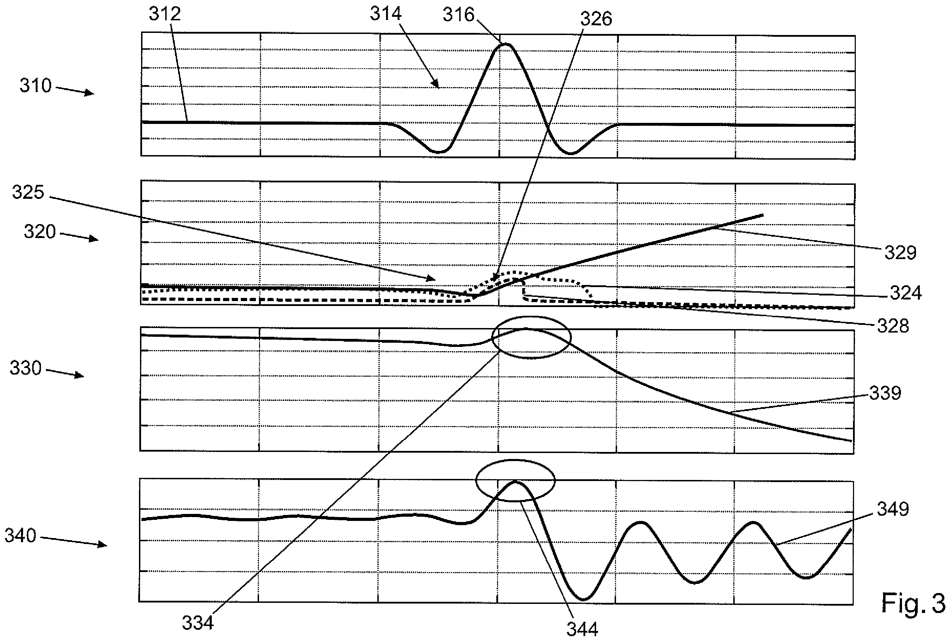

Fig. 3 zeigt schematisch und exemplarisch den zeitlichen Verlauf des Auftretens einer Böe sowie zugehörige Steuerungen der Windenergieanlage und sich daraus ergebenden Lasten. Auf der horizontalen Achse ist ein Zeitraum von 30 Sekunden dargestellt, der einen Zeitraum von 0 bis 10 Sekunden vor Auftreten der Böe, einen Zeitraum mit deutlicher Änderung der Windgeschwindigkeit, das heißt die Böe, von 10 bis 20 Sekunden und einen Zeitraum von 20 bis 30 Sekunden, bei dem wieder in etwa eine konstante Windgeschwindigkeit herrscht. Fig. 3 zeigt vertikal übereinander vier Diagramme mit jeweils unterschiedlichen aufgetragenen Werten. Ein erstes Diagramm 110 zeigt die Windgeschwindigkeit 312 mit einer sogenannten extremen Betriebsböe 314 (EOG, Extreme Operation Gust), das heißt eine bestimmte Form einer Starkböe mit zunächst absinkender und danach stark ansteigender Windgeschwindigkeit.

Zu der gleichen Zeit, zu der Diagramm 110 die Windgeschwindigkeit zeigt, zeigt ein weiteres Diagramm 320 den Verlauf des Blattwinkels 329, ein Diagramm 330 eine Drehzahl 339 des Rotors und ein Diagramm 340 auf den Turm der Windenergieanlage wirkende Lasten 349. Besonders interessant ist die Regelung des Pitchwinkels in Diagramm 320, die nämlich in der Fig. 3 nach Auftreten eines Maximums 316 der Windgeschwindigkeit zu einer Überdrehzahl 334 sowie einer extremen Turmlast 344 führt.

Der Pitchwinkelverlauf 329 ist der durch klassische Regler tatsächlich über die Zeit an die Rotorblätter anliegende Winkel der Rotorblätter. Dieser Blattwinkel bestimmt sich durch zugrundeliegende Regelungen, wobei der Ist-Verlauf des Pitchwinkels 329 im Wesentlichen von einem Drehzahlregler bestimmt wird, der in diesem Fall die Windenergieanlage auf Nennleistung regelt. Der Drehzahlregler wird mit einer sogenannten alpha-min-Regelung überlagert, die zur Vermeidung von Überlasten einen minimalen Pitchwinkel 328 bestimmt, der bei der Regelung als untere Grenze des Pitchwinkels festgelegt ist.

Es ist bekannt, dass für den Mindestpitchwinkel eine sogenannte *αₘᵢₙ*- Regelung einen mindestens an dem Blatt anliegenden Pitchwinkel kontrolliert. Damit wird gewährleistet, dass der oder die Pitchwinkel des oder der Rotorblätter nicht unterhalb eines bestimmten Pitchwinkels eingestellt werden, der beispielsweise zu übermäßig großen Lasten auf den Rotor führt. Das Reduzieren des Rotorschubes kann demnach unkompliziert und mit wenig Aufwand in die bestehende *αₘᵢₙ*- Regelung integriert, bzw. darüber überlagert werden. Diese Ausführung zeichnet sich demnach durch einen geringen Mehraufwand für die Einrichtung und Steuerung aus.

In einem Bereich 325 einer auftreffenden Böe kann gesehen werden, dass aufgrund der sich absenkenden Windgeschwindigkeit auch der Drehzahlregler den Pitchwinkel 329 näher in Richtung des minimalen Pitchwinkels 328 absenkt, was für den weiteren Verlauf der Böe verheerende Folgen hat. Dann nämlich, wenn die Windgeschwindigkeit stark ansteigt, in dem Bereich 326, kann der Pitchwinkel 329 aufgrund des Drehzahlreglers nicht rasch nachfolgen. Diese Verzögerung beim Herausdrehen der Blätter, das heißt beim Erhöhen des Pitchwinkels, führt zu den bereits angedeuteten extremen Drehzahlen 334 bzw. extremen Turmlasten 344.

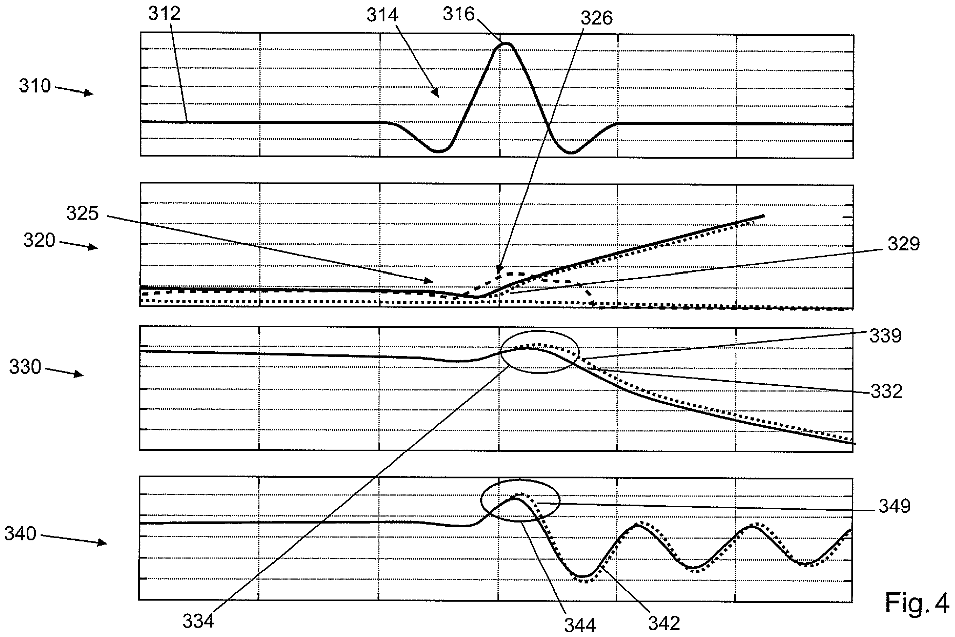

In Fig. 3 ist ferner der erfindungsgemäße Verlauf eines Stationärblattwinkels 324 gezeigt, der unter Berücksichtigung bekannter Rotoreigenschaften, dem elektrischen System und den Windeigenschaften zu einem gewünschten stationären Betriebszustand der Windenergieanlage, insbesondere zu einer gewünschten aerodynamischen Leistung führt. Bis zum Auftreffen der Böe, das heißt die zunächst sich verringernde Windgeschwindigkeit, verlaufen der Istwert des Pitchwinkels 329 und der Stationärblattwinkel 324 parallel. Im Bereich 326 des starken Anstiegs kann gesehen werden, dass der Stationärblattwinkel 324 zeitlich deutlich vor dem minimalen Pitchwinkel 328 der bekannten alpha-min-Regelung ansteigt. Die Verwendung des Stationärblattwinkels 324 zur Vorsteuerung und damit zum Eingriff in den Betrieb der Windenergieanlage liefert gerade in dem Bereich 326 demnach Vorteile, die nachfolgend mit Verweis auf Fig. 4 anschaulich gezeigt werden.

Fig. 4 zeigt schematisch und exemplarisch die erfindungsgemäße Steuerung im Vergleich mit einer herkömmlichen Regelung, die in Fig. 3 gezeigt wird. Ein herkömmlicher Verlauf desPitchwinkels 329 unterscheidet sich von dem erfindungsgemäßen Verlauf 322 dadurch, dass erfindungsgemäß der Stationärblattwinkel 324 zur Vorsteuerung in die Regelung eingreift. Zu dem Zeitpunkt im Bereich 326 der Böe erfolgt das Herauspitchen konventionell einige Sekunden später, nämlich erst dann, wenn die Spitzengeschwindigkeit der Böe bereits erreicht ist. Im Gegensatz dazu erfolgt mit dem erfindungsgemäßen Steuerungsverfahren gemäß dem Verlauf des Pitchwinkels 322 bereits frühzeitig die Erhöhung des Blattwinkels, was im Ergebnis zu einer Reduktion der Spitzenlasten führt. Die Unterschiede des erfindungsgemäßen Verfahrens sind auch in den Diagrammen 330 und 340 sichtbar. Erfindungsgemäß liegt die Rotordrehzahl 332 besonders im Extrembereich unterhalb der Drehzahl 339, die mit einer konventionellen Regelung erreicht wird. Im Bereich der Turmlasten ist eine Reduktion des Extremwertes um bis zu 10 % erreichbar.

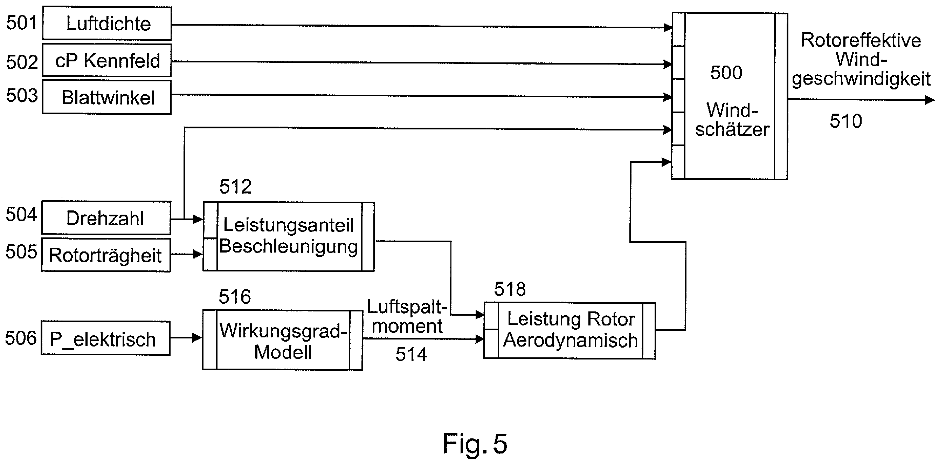

Fig. 5 zeigt schematisch und exemplarisch einen erfindungsgemäßen Windschätzer 500. Der Windschätzer 500 verarbeitet unterschiedliche Eingangsgrößen, um eine rotoreffektive Windgeschwindigkeit 510 zu erhalten.

Zunächst erhält der Windschätzer 500 eine Luftdichte 501, ein c_{P}-Kennfeld 502 und einen aktuell anliegenden Blattwinkel der Rotorblätter 503.

Als weitere Parameter fließen eine Drehzahl 504, eine Rotorträgheit 505 und die elektrische Leistung 506 in den Windschätzer 500 ein. Die Drehzahl 504 sowie die Rotorträgheit 505 werden in einen Leistungsanteil für die Beschleunigung 512 umgerechnet und mit einem Luftspaltmoment 514, das mittels eines Wirkungsgradmodells 516 aus der elektrischen Leistung 506 abgeleitet wurde, zu der aerodynamischen Leistung des Rotors 518 zusammengefasst.

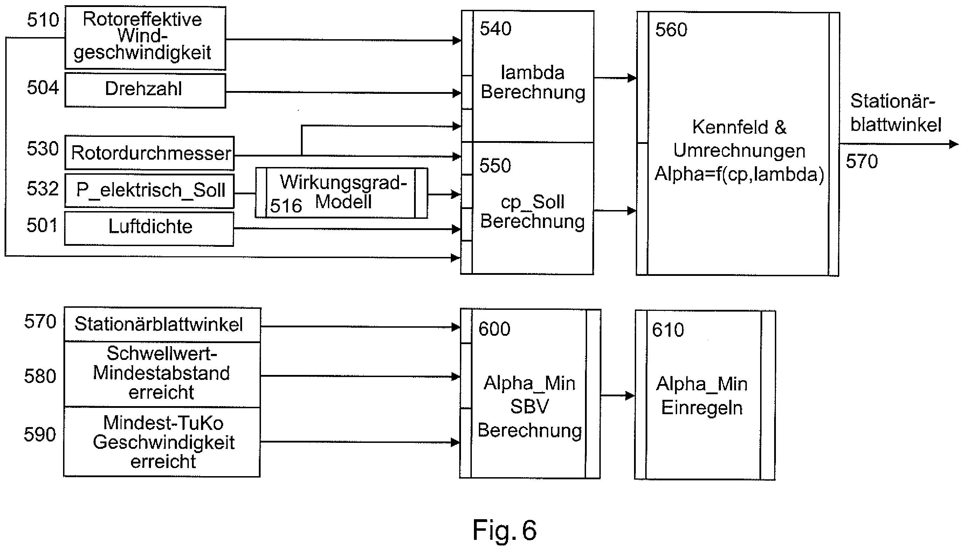

Fig. 6 zeigt schematisch und exemplarisch die Starkböenvorsteuerung gemäß der vorliegenden Erfindung. Die rotoreffektive Windgeschwindigkeit 510 wird zusammen mit der Drehzahl 504 und einem Rotordurchmesser 530 zur Berechnung der Schnelllaufzahl Lambda in einem Schritt 540 verwendet. Die berechnete Schnelllaufzahl Lambda kann entweder die Ist-Schnelllaufzahl oder die Soll-Schnelllaufzahl, die sich anhand der rotoreffektiven Windgeschwindigkeit 510 ergibt, sein.

Aus der rotoreffektiven Windgeschwindigkeit 510 wird weiter zusammen mit dem Rotordurchmesser 530 und einer mittels Wirkungsgradmodell 516 umgerechneten elektrischen Soll-Leistung 532 in einem Schritt 550 ein Sollwert des Leistungsbeiwertes c_{P} berechnet. Der Sollwert der elektrischen Leistung 532 ist häufig die Nennleistung, da besonders in diesem Bereich die Gefahr von Extremlasten besteht.

In einem Schritt 560 wird dann basierend auf der in Schritt 540 bestimmten Schnelllaufzahl und den in Schritt 550 bestimmten Sollwert des Leistungskoeffizienten ein Stationärblattwinkel 570 bestimmt. Der Stationärblattwinkel ist vorzugsweise als Funktion sowohl des Leistungsbeiwertes als auch der Schnelllaufzahl definiert und kann beispielsweise in Form eines Kennfeldes oder Ähnlichem hinterlegt sein. Im Bereich der Nennleistung der Windenergieanlage lässt sich die Dimensionalität auf eine Dimension reduzieren, nämlich die Schnelllaufzahl.

Der Stationärblattwinkel 570 wird dann in dem Blockschaltbild der Fig. 6 zusammen mit zwei weiteren Bedingungen in einem Schritt 600 zu einem minimalen Blattwert für eine Starkböenvorsteuerung (SBV) berechnet. Dieser minimale Blattwert wird dann in einem Schritt 610 in die Regelung der Anlage eingespeist.

Die Berechnung der Starkböenvorsteuerung in Schritt 600 basiert auf dem geschätzten Stationärblattwinkel 570. Hinzu wird geprüft, ob ein Schwellwert-Mindestabstand 580 erreicht ist. Lediglich dann, wenn der Stationärblattwinkel um wenigstens den Schwellwert-Mindestabstand 580 von dem Ist-Blattwinkel abweicht, soll nämlich die erfindungsgemäße Steuerung eingreifen, um Fehlauslösungen und damit möglicherweise Ertragseinbußen zu vermeiden. Als weitere Bedingung für die Steuerung ist, ob der Turmkopf der Windenergieanlage eine Mindestgeschwindigkeit 590 erreicht hat. Die Mindestgeschwindigkeit ist insbesondere in der Richtung von dem Rotor nach hinten, sodass die Schubrücknahme, die durch das Herausdrehen der Rotorblätter, das heißt eine Erhöhung des Pitchwinkels, erfolgt, nicht die Turmschwingung verstärkt und damit eine ungewünschte Reaktion ergibt. Gerade bei einem zurückschwenkenden Turm ist aber die Rücknahme des Schubes besonders hilfreich, sodass die Aufnahme dieser Bedingung eine weitere Verbesserung darstellt.

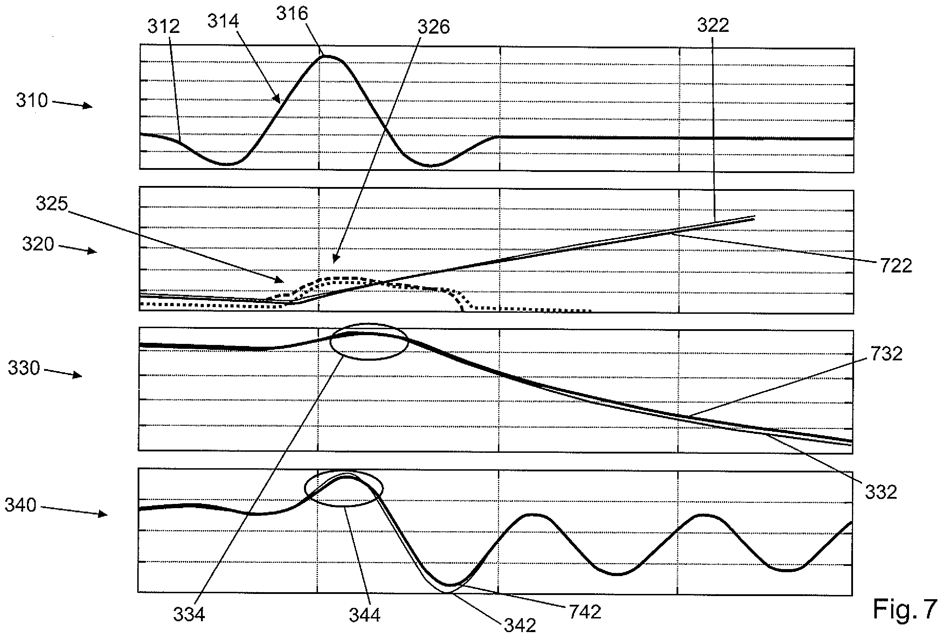

Fig. 7 zeigt schließlich schematisch und exemplarisch ähnliche Ansichten, wie sie Figuren 3 und 4 zeigen, nämlich Verläufe der Windgeschwindigkeit 300, des Blattwinkels 310, der Rotorgeschwindigkeit 320 und der Turmlasten 340. Fig. 7 illustriert den zeitlichen Ausschnitt um die Böe 314 herum und skizziert den Fall, bei dem die angesetzten Polaren der Rotorblätter denen verschmutzter Rotorblätter entsprechen. In dem in Fig. 7 zugrundeliegenden Fall wird in der Steuerung der Anlage von einem optimistischen Kennfeld der Leistungsbeiwerte (für ein sauberes Blatt) ausgegangen, während die Auswirkung mit verschmutztem, das heißt aerodynamisch schlechteren, Rotorblättern simuliert wird. Während der Blattwinkel 722 mit simuliert schlechten Profilpolaren etwas geringer als der Blattwinkel 322 mit sauberen Profilen ist, kann gesehen werden, dass die maximale Drehzahl 334 zwischen den Drehzahlverläufen 332 und 732 mit verschmutzten Profilpolaren im Wesentlichen identisch ist und die maximal zu erwartenden Extremlasten des Turmes 344 sogar für die verschmutzten Rotorblätter 742 geringer ist. Somit kann eine gegenüber den angesetzten Leistungsbeiwerten schlechtere Profilpolare der Rotorblätter, das heißt angenommen sind optimale Leistungsbeiwerte und tatsächlich liegen schlechtere Leistungsbeiwerte durch beispielsweise Verschmutzung der Blätter vor, sogar zu niedrigeren Extremlasten als bei den eigentlich angenommenen Werten führen.

## Patentansprüche

1. Verfahren zum Betreiben einer Windenergieanlage, wobei die Windenergieanlage einen aerodynamischen Rotor mit wenigstens einem Rotorblatt, das an einer Rotornabe des Rotors montiert ist, aufweist, wobei ein Blattwinkel des wenigstens einen Rotorblattes um seine Längsachse bezüglich der Rotornabe verstellbar ist, wobei das Verfahren die folgenden Schritte umfasst:
- Bereitstellen aktueller Windeigenschaften,
- Bereitstellen eines Ist-Blattwinkels des Rotorblattes oder eines Mittelwertes aller Ist-Blattwinkel der Rotorblätter,
- Bestimmung eines Stationärblattwinkels des wenigstens einen Rotorblattes, der unter Berücksichtigung bekannter Rotoreigenschaften, dem elektrischen System und den Windeigenschaften zu einem gewünschten stationären Betriebszustand der Windenergieanlage führt,
- Vergleich des Stationärblattwinkels mit dem Ist-Blattwinkel oder dem Mittelwert aller Ist-Blattwinkel,
**dadurch gekennzeichnet, dass** das Verfahren umfasst:
- Verwenden des Stationärblattwinkels zur Vorsteuerung in einem Reglerentwurf zur Leistungsregelung der Windenergieanlage, wenn der Stationärblattwinkel signifikant von dem Ist-Blattwinkel oder dem Mittelwert aller Ist-Blattwinkel abweicht.

2. Verfahren nach Anspruch 1, wobei der gewünschte stationäre Betriebszustand eine von dem Rotor aufgenommene gewünschte aerodynamische Leistung umfasst.

3. Verfahren nach einem der vorstehenden Ansprüche, wobei der Stationärblattwinkel signifikant von dem Ist-Blattwinkel oder dem Mittelwert aller Ist-Blattwinkel abweicht, wenn die Abweichung größer eines Schwellwertes, oder größer eines Systems aus mehrstufigen Schwellwerten ist, wobei der Schwellwert oder die Schwellwerte vorzugsweise in einem Bereich von 2° bis 3° liegen.

4. Verfahren nach einem der vorstehenden Ansprüche, wobei das Anpassen des Betriebs der Windenergieanlage proportional zur Abweichung zwischen dem Ist-Blattwinkel oder dem Mittelwert aller Ist-Blattwinkel und dem Stationärblattwinkel erfolgt.

5. Verfahren nach einem der vorstehenden Ansprüche, wobei das Verfahren weiter umfasst:
- Bestimmen einer Längsgeschwindigkeit eines Turmkopfes der Windenergieanlage in Richtung des Windes und/oder einer Turmlast-Änderungsgeschwindigkeit,
- Vergleichen der Längsgeschwindigkeit des Turmkopfes und/oder der Turmlast-Änderungsgeschwindigkeit mit einem zweiten vorgegebenen Schwellwert oder einem System aus mehrstufigen Schwellwerten,
wobei das Anpassen des Betriebs der Windenergieanlage nur dann erfolgt, wenn die Längsgeschwindigkeit des Turmkopfes und/oder die Turmlast-Änderungsgeschwindigkeit den zweiten vorgegebenen Schwellwert überschreitet, wobei der zweite vorgegebene Schwellwert oder das System insbesondere aus mehrstufigen Schwellwerten in einer Größenordnung von 0.1m/s bis 0.5m/s für die Längsgeschwindigkeit des Turmkopfes liegen.

6. Verfahren nach Anspruch 5, wobei der zweite vorgegebene Schwellwert oder das System aus mehrstufigen Schwellwerten in Abhängigkeit der Signifikanz der Abweichung des Stationärblattwinkels von dem Ist-Blattwinkel oder dem Mittelwert aller Ist-Blattwinkel gebildet werden.

7. Verfahren nach einem der Ansprüche 5 bis 6, wobei die Signifikanz der Abweichung des Stationärblattwinkels von dem Ist-Blattwinkel oder dem Mittelwert aller Ist-Blattwinkel als komplexe Funktion der Turmlasten, insbesondere als Funktion der Längsgeschwindigkeit des Turmkopfes, implementiert ist.

8. Verfahren nach einem der vorstehenden Ansprüche, wobei das Verfahren weiter aufweist:
- Bereitstellen einer aktuellen rotoreffektiven Windgeschwindigkeit,
wobei die Bestimmung des Stationärblattwinkels des wenigstens eines Rotorblattes basierend auf der aktuellen rotoreffektiven Windgeschwindigkeit erfolgt.

9. Verfahren nach einem der vorstehenden Ansprüche, wobei die aktuelle rotoreffektive Windgeschwindigkeit basierend auf einer Luftdichte, einem Leistungskoeffizienten-Kennfeld, dem Ist-Blattwinkel, einer Drehzahl der Windenergieanlage sowie einer aerodynamischen Leistung des Rotors geschätzt wird.

10. Verfahren nach einem der vorstehenden Ansprüche, wobei eine aerodynamische Leistung des Rotors anhand einer turbinenseitigen Leistungsbilanz berechnet wird, wobei die turbinenseitige Leistungsbilanz vorzugsweise umfasst:
- elektrisch in ein Stromnetz eingespeiste Leistung
- Wärmeverluste, die gemessen, oder geeignet modelliert werden, und
- für die Rotor- und Generatorbeschleunigung aufgebrachte Leistung.

11. Verfahren nach einem der vorstehenden Ansprüche, wobei die Bestimmung des Stationärblattwinkels des wenigstens eines Rotorblattes als Funktion einer berechneten Schnelllaufzahl und eines berechneten Soll-Leistungskoeffizienten erfolgt, wobei
- die Schnelllaufzahl als eine Funktion einer aktuellen rotoreffektiven Windgeschwindigkeit, einer Drehzahl der Windenergieanlage sowie eines Durchmessers des Rotors berechnet wird, und/oder
- der Soll-Leistungskoeffizient als eine Funktion der aktuellen rotoreffektiven Windgeschwindigkeit, des Durchmessers des Rotors, eines Sollwertes der elektrischen Leistung und der Luftdichte berechnet wird.

12. Verfahren nach einem der vorstehenden Ansprüche, wobei die Bestimmung des Stationärblattwinkels folgende Schritte umfasst:
- Bereitstellen einer Sensitivität, insbesondere in Form tabellierter Werte, des Rotors auf Blattwinkeländerungen, wobei die Sensitivität als Verhältnis der Änderung der aerodynamischen Leistung zu einer Änderung des Rotorblattwinkels in Abhängigkeit einer Schnelllaufzahl bereitgestellt wird,
- Bestimmen des Stationärblattwinkels ausgehend von dem Ist-Blattwinkel oder dem Mittelwert aller Ist-Blattwinkel unter Verwendung der Sensitivität, insbesondere durch schrittweise Integration der Sensitivität bis zum Erreichen der gewünschten aerodynamischen Leistung.

13. Windenergieanlage, die einen aerodynamischen Rotor mit wenigstens einem Rotorblatt, das an einer Rotornabe des Rotors montiert ist, aufweist, wobei ein Blattwinkel des wenigstens einen Rotorblattes um seine Längsachse bezüglich der Rotornabe verstellbar ist, wobei die Windenergie eine Steuerung aufweist, die dazu eingerichtet ist, die Windenergieanlage nach einem Verfahren gemäß wenigstens einem der Ansprüche 1 bis 12 zu betreiben.

14. Windpark mit mehreren Windenergieanlagen nach Anspruch 13.

## Claims

1. A method for operating a wind turbine, wherein the wind turbine comprises an aerodynamic rotor with at least one rotor blade which is mounted on a rotor hub of the rotor, wherein a blade angle of the at least one rotor blade is adjustable about its longitudinal axis relative to the rotor hub, wherein the method comprises the following steps:
- providing current wind properties,
- providing an actual blade angle of the rotor blade or an average value of all actual blade angles of the rotor blades,
- determining a steady-state blade angle of the at least one rotor blade which, taking into account known rotor properties, the electrical system and the wind properties, leads to a desired steady operating state of the wind turbine,
- comparing the steady-state blade angle with the actual blade angle or the average value of all actual blade angles,
**characterized in that** the method comprises:
- using the steady-state blade angle for feedforward control in a controller design for power control of the wind turbine, if the steady-state blade angle differs significantly from the actual blade angle or the average value of all actual blade angles.

2. The method as claimed in claim 1, wherein the desired steady operating state comprises an aerodynamic power achieved by the rotor.

3. The method as claimed in any of the preceding claims, wherein the steady-state blade angle deviates significantly from the actual blade angle or the average value of all actual blade angles when the deviation exceeds a threshold value or exceeds a system of multiple threshold values, wherein the threshold value or threshold values preferably lie in a range from 2° to 3°.

4. The method as claimed in any of the preceding claims, wherein the adaptation of operation of the wind turbine is proportional to the deviation between the actual blade angle or average value of all actual blade angles and the steady-state blade angle.

5. The method as claimed in any of the preceding claims, wherein the method furthermore comprises:
- determining a longitudinal speed of a tower head of the wind turbine in the direction of the wind and/or a tower load change rate,
- comparing the longitudinal speed of the tower head and/or the tower load change rate with a second predefined threshold value or system of multiple threshold values, wherein the operation of the wind turbine is adapted only if the longitudinal speed of the tower head and/or the tower load change rate exceeds the second predefined threshold value, wherein the second predefined threshold value or system of multiple threshold values lies in an order of magnitude from 0.1 m/s to 0.5m/s for the longitudinal speed of the tower head.

6. The method as claimed in claim 5, wherein the second predefined threshold value or system of multiple threshold values is formed depending on the significance of the deviation of the steady-state blade angle from the actual blade angle or the average value of all actual blade angles.

7. The method as claimed in any of claims 5 to 6, wherein the significance of the deviation of the steady-state blade angle from the actual blade angle or the average value of all actual blade angles is implemented as a complex function of the tower loads, in particular as a function of the longitudinal speed of the tower head.

8. The method as claimed in any of the preceding claims, wherein the method furthermore comprises:
- providing a current rotor-effective wind speed,
wherein the steady-state blade angle of the at least one rotor blade is determined on the basis of the current rotor-effective wind speed.

9. The method as claimed in any of the preceding claims, wherein the current rotor-effective wind speed is estimated based on an air density, a power coefficient map, the actual blade angle, a rotation speed of the wind turbine, and an aerodynamic power of the rotor.

10. The method as claimed in any of the preceding claims, wherein an aerodynamic power of the rotor is calculated from a turbine power balance, wherein the turbine power balance preferably comprises:
- electrical power fed into a power network,
- heat losses which are measured or suitably modelled, and
- power used for rotor and generator acceleration.

11. The method as claimed in any of the preceding claims, wherein the steady-state blade angle of the at least one rotor blade is determined as a function of a calculated tip speed ratio and a calculated nominal power coefficient, wherein
- the tip speed ratio is calculated as a function of a current rotor-effective wind speed and a rotation speed of the wind turbine and a diameter of the rotor, and/or
- the nominal power coefficient is calculated as a function of the current rotor-effective wind speed, the diameter of the rotor, a nominal value of the electrical power, and the air density.

12. The method as claimed in any of the preceding claims, wherein the determination of the steady-state blade angle comprises the following steps:
- providing a sensitivity, in particular in the form of tabular values, of the rotor to blade angle changes, wherein the sensitivity is provided as a ratio of the change of aerodynamic power to a change of rotor blade angle as a function of a tip speed ratio,
- determining the steady-state blade angle on the basis of the actual blade angle or average value of all actual blade angles using the sensitivity, in particular by step-by-step integration of the sensitivity until the desired aerodynamic power is reached.

13. A wind turbine comprising an aerodynamic rotor with at least one rotor blade mounted on a rotor hub of the rotor, wherein a blade angle of the at least one rotor blade is adjustable about its longitudinal axis with respect to the rotor hub, wherein the wind turbine comprises a controller which is configured to operate the wind turbine using a method as claimed in at least one of claims 1 to 12.

14. A wind park with several wind turbines as claimed in claim 13.

## Revendications

1. Procédé pour faire fonctionner une éolienne, dans lequel l'éolienne présente un rotor aérodynamique avec au moins une pale de rotor, qui est montée sur un moyeu de rotor du rotor, dans lequel un angle de pale d'au moins une pale de rotor est réglable autour de son axe longitudinal par rapport au moyeu de rotor, dans lequel le procédé comporte les étapes suivantes :
- la fourniture de propriétés de vent actuelles,
- la fourniture d'un angle de pale réel de la pale de rotor ou d'une valeur médiane de tous les angles de pale réels des pales de rotor,
- la détermination d'un angle de pale stationnaire d'au moins une pale de rotor qui mène en tenant compte de propriétés de rotor connues, du système électrique et des propriétés du vent à un état de fonctionnement stationnaire souhaité de l'éolienne,
- la comparaison de l'angle de pale stationnaire avec l'angle de pale réel ou la valeur médiane de tous les angles de pale réels,
**caractérisé en ce que** le procédé comporte :
- l'utilisation de l'angle de pale stationnaire pour la précommande dans une conception de régulateur pour la régulation de puissance de l'éolienne lorsque l'angle de pale stationnaire diverge de manière significative de l'angle de pale réel ou de la valeur médiane de tous les angles de pales réels.

2. Procédé selon la revendication 1, dans lequel l'état de fonctionnement stationnaire souhaité comporte une puissance aérodynamique souhaitée reçue par le rotor.

3. Procédé selon l'une quelconque des revendications précédentes, dans lequel l'angle de pale stationnaire diverge de manière significative de l'angle de pale réel ou de la valeur médiane de tous les angles de pale réels lorsque la divergence est supérieure à une valeur seuil, ou supérieure à un système de valeurs seuils progressives, dans lequel la valeur seuil ou les valeurs seuils se trouvent de préférence dans une plage de 2° à 3°.

4. Procédé selon l'une quelconque des revendications précédentes, dans lequel l'adaptation du fonctionnement de l'éolienne est effectuée de manière proportionnelle à la divergence entre l'angle de pale réel ou la valeur médiane de tous les angles de pale réels et l'angle de pale stationnaire.

5. Procédé selon l'une quelconque des revendications précédentes, dans lequel le procédé comporte en outre :
- la détermination d'une vitesse longitudinale d'une tête de tour de l'éolienne en direction du vent et/ou d'une vitesse de modification de charge de tour,
- la comparaison de la vitesse longitudinale de la tête de tour et/ou de la vitesse de modification de charge de tour avec une seconde valeur seuil prescrite ou un système de valeurs seuils progressives,
- dans lequel l'adaptation du fonctionnement de l'éolienne n'est effectuée que lorsque la vitesse longitudinale de la tête de tour et/ou la vitesse de modification de charge de tour dépasse la seconde valeur seuil prescrite, dans lequel la seconde valeur seuil prescrite ou le système en particulier de valeurs seuils progressives se trouve dans un ordre de grandeur de 0,1 m/s à 0,5 m/s pour la vitesse longitudinale de la tête de tour.

6. Procédé selon la revendication 5, dans lequel la seconde valeur seuil prédéfinie ou le système de valeurs seuils progressives est formé en fonction de la signification de la divergence de l'angle de pale stationnaire de l'angle de pale réel ou la valeur médiane de tous les angles de pale réels.

7. Procédé selon l'une quelconque des revendications 5 à 6, dans lequel la signification de la divergence de l'angle de pale stationnaire de l'angle de pale réel ou la valeur médiane de tous les angles de pale réels est implémentée comme fonction complexe des charges de tour, en particulier en fonction de la vitesse longitudinale de la tête de tour.

8. Procédé selon l'une quelconque des revendications précédentes, dans lequel le procédé présente en outre :
- la fourniture d'une vitesse du vent à rotor effectif actuelle,
- dans lequel la détermination de l'angle de pale stationnaire d'au moins une pale de rotor est effectuée en se basant sur la vitesse du vent à rotor effectif actuelle.

9. Procédé selon l'une quelconque des revendications précédentes, dans lequel la vitesse du vent à rotor effectif actuelle est estimée sur la base d'une densité d'air, d'un champ caractéristique de coefficient de puissance, de l'angle de pale réel, d'une vitesse de rotation de l'éolienne ainsi que d'une puissance aérodynamique du rotor.

10. Procédé selon l'une quelconque des revendications précédentes, dans lequel une puissance aérodynamique du rotor est calculée au moyen d'un bilan de puissance côté turbine, dans lequel le bilan de puissance côté turbine comporte de préférence :
- une puissance injectée électriquement dans un réseau électrique
- des pertes de chaleur qui sont mesurées, ou modélisées de manière appropriée, et
- une puissance appliquée pour l'accélération du rotor et du générateur.

11. Procédé selon l'une quelconque des revendications précédentes, dans lequel la détermination de l'angle de pale stationnaire d'au moins une pale de rotor est effectuée en fonction d'une vitesse spécifique calculée et d'un coefficient de puissance de consigne calculé, dans lequel
- la vitesse spécifique est calculée en fonction d'une vitesse du vent à rotor effectif actuelle, d'une vitesse de rotation de l'éolienne ainsi que d'un diamètre du rotor, et/ou
- le coefficient de puissance de consigne est calculé en fonction de la vitesse de vent à rotor effectif actuelle, du diamètre du rotor, d'une valeur de consigne de la puissance électrique et de la densité d'air.

12. Procédé selon l'une quelconque des revendications précédentes, dans lequel la détermination de l'angle de pale stationnaire comporte les étapes suivantes :
- la fourniture d'une sensibilité, en particulier sous la forme de valeurs présentées dans un tableau, du rotor sur des modifications d'angle de pale, dans lequel la sensibilité est fournie comme rapport entre la modification de la puissance aérodynamique et une modification de l'angle de pale de rotor selon une vitesse spécifique,
- la détermination de l'angle de pale stationnaire à partir de l'angle de pale réel ou la valeur médiane de tous les angles de pale réels en utilisant la sensibilité, en particulier par intégration progressive de la sensibilité jusqu'à l'atteinte de la puissance aérodynamique souhaitée.

13. Eolienne qui présente un rotor aérodynamique avec au moins une pale de rotor, qui est montée au niveau d'un moyeu de rotor du rotor, dans laquelle un angle de pale d'au moins une pale de rotor est réglable autour de son axe longitudinal par rapport au moyeu de rotor, dans lequel l'éolienne présente une commande qui est conçue afin de faire fonctionner l'éolienne selon un procédé selon au moins l'une quelconque des revendications 1 à 12.

14. Parc éolien avec plusieurs éoliennes selon la revendication 13.
